(19) Europäisches Patentamt
European Patent Office
Office européen des brevets

(11) **EP 3 780 356 A1**

(12) **EUROPEAN PATENT APPLICATION**
published in accordance with Art. 153(4) EPC

(43) Date of publication:
**17.02.2021 Bulletin 2021/07**

(51) Int Cl.:
***H02K 3/493*** (2006.01)

(21) Application number: **18912907.5**

(22) Date of filing: **26.12.2018**

(86) International application number:
**PCT/JP2018/047980**

(87) International publication number:
**WO 2019/187440 (03.10.2019 Gazette 2019/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.03.2018 JP 2018059092**

(71) Applicant: **Hitachi, Ltd.**
**Tokyo 100-8280 (JP)**

(72) Inventors:
• SUGIMOTO, Shinji
  Tokyo 100-8280 (JP)
• TAKAHASHI, Akeshi
  Tokyo 100-8280 (JP)

(74) Representative: **MERH-IP Matias Erny Reichl Hoffmann**
**Patentanwälte PartG mbB**
**Paul-Heyse-Strasse 29**
**80336 München (DE)**

(54) **ROTARY ELECTRIC MACHINE AND VEHICLE**

(57)    A magnetic wedge has a fitting portion in which a taper is formed such that a circumferential width of the magnetic wedge reduces toward an inner peripheral side and is configured to have a convex shape from a terminal end on an inner peripheral side of the taper toward the more inner peripheral side, and a circumferential width W1 of the magnetic wedge at the terminal end on the inner peripheral side of the taper, a circumferential width W2 of a surface of the magnetic wedge that opposes a rotor, and a width W3 of a slot opening have a relationship of W1 ≤ W2 < W3.

## FIG. 1

EP 3 780 356 A1

## Description

Technical Field

The present invention relates to a rotating electric machine and a vehicle, and is particularly suitable when it is applied to a rotating electric machine provided with a magnetic wedge configured to reduce a radio frequency loss on a gap surface between a stator and a rotor.

Background Art

In general, factors that cause a loss in a rotating electric machine are roughly classified into a copper loss generated at the time of energizing a stator winding, an iron loss generated in iron cores of a stator and a rotor, a mechanical loss generated by rotation, and stray load loss generated on a surface of a gap between the stator and the rotor. A loss included in the stray load loss includes a radio frequency loss generated on the gap surface between the stator and the rotor as a radio frequency eddy current is generated on the gap surface between the stator and the rotor due to a pulsation of a gap magnetic flux density based on the number of slots in the stator and the rotor.

As a method of reducing such a radio frequency loss, a method of reducing a loss using a magnetic wedge is disclosed in PTLs 1, 2, and 3. In the rotating electric machines disclosed in PTLs 1, 2, and 3, the magnetic wedge is made of a material having a high permeability at both ends in a circumferential direction and a material having a low permeability at a central portion.

On the other hand, PTL 4 discloses a literature that solves a problem regarding strength of a non-magnetic wedge. In addition, in PTL 4, it is attempted to improve reliability by suppressing stress concentration regarding a centrifugal force applied to the non-magnetic wedge used to fix a conductor portion of a rotor (see PTL 1).

Citation List

Patent Literature

PTL 1: JP 2010-136460 A
PTL 2: JP H5-9154 A
PTL 3: JP H6-311683 A
PTL 4: JP 2009-219277 A

Summary of Invention

Technical Problem

However, although the configurations of PTLs 1, 2, and 3 are configurations focusing on the magnetic wedge for the purpose of reducing the radio frequency loss, there is a problem that an electromagnetic excitation force in a circumferential direction and a radial direction is applied to the magnetic wedge and causes vibration due to a leakage magnetic flux in a slot portion, thereby damaging the magnetic wedge.

On the other hand, in PTL 4, it is presumed that the electromagnetic excitation force in the circumferential direction applied to the magnetic wedge is not considered since the configuration that suppress the stress concentration regarding the centrifugal force is provided. Therefore, when the structure disclosed in PTL 4 is applied to the magnetic wedge, there is a problem that the magnetic wedge is damaged by the electromagnetic excitation force applied in the circumferential direction.

The present invention has been made in consideration of the above-described points, and aims to propose a rotating electric machine and a vehicle that can achieve both high efficiency and suppression of a decrease in reliability while reducing a radio frequency loss using a magnetic wedge.

Solution to Problem

In order to solve such problems, in the present invention, a rotating electric machine includes: a stator; a rotor arranged with a gap so as to oppose the stator; a stator core having a plurality of teeth formed therein; and a stator slot that houses a stator winding between adjacent teeth among the plurality of teeth, the stator slot having a slot opening larger than a width of the stator winding and a magnetic wedge being fitted in the slot opening. The magnetic wedge has a fitting portion formed with a taper in which a circumferential width of the magnetic wedge reduces toward an inner peripheral side, and is configured to form a convex shape from a terminal end on the inner peripheral side of the taper toward the more inner peripheral side. A circumferential width $W1$ of the magnetic wedge at the terminal end on the inner peripheral side of the taper, a circumferential width $W2$ of a surface of the magnetic wedge that opposes the rotor, and a width $W3$ of the slot opening have a relationship of $W1 \leq W2 < W3$.

In addition, in the present invention, a vehicle is provided with a drive system equipped with a rotating electric machine, which includes: a stator; a rotor arranged with a gap so as to oppose the stator; a stator core having a plurality of teeth formed therein; and a stator slot that houses a stator winding between adjacent teeth among the plurality of teeth, the stator slot having a slot opening larger than a width of the stator winding and a magnetic wedge being fitted in the slot opening. The magnetic wedge has a fitting portion formed with a taper in which a circumferential width of the magnetic wedge reduces toward an inner peripheral side, and is configured to form a convex shape from a terminal end on the inner peripheral side of the taper toward the more inner peripheral side. A circumferential width $W1$ of the magnetic wedge at the terminal end on the inner peripheral side of the taper, a circumferential width W2 of a surface of the magnetic wedge that opposes the rotor, and a width W3 of the slot opening have a relationship of W1 ≤ W2 < W3.

Advantageous Effects of Invention

According to the present invention, it is possible to achieve both the high efficiency and the suppression of the decrease in reliability while reducing the radio frequency loss using the magnetic wedge.

Brief Description of Drawings

[FIG. 1] FIG. 1 is an axial cross-sectional view of a rotating electric machine according to a first embodiment.
[FIG. 2] FIG. 2 is a circumferential cross-sectional view of a stator and a rotor according to the first embodiment.
[FIG. 3] FIG. 3 is an enlarged view of a periphery of a wedge in a circumferential cross section of a stator slot and a rotor slot in a conventional structure.
[FIG. 4] FIG. 4 is an enlarged view of a periphery of a wedge in a circumferential cross section of a stator slot in a general structure and a schematic view illustrating a verification example of a magnetic resistance of a gap portion as viewed from the rotor.
[FIG. 5] FIG. 5 is an enlarged view of a periphery of a wedge in a circumferential cross section of a stator slot and a rotor slot according to the first embodiment.
[FIG. 6] FIG. 6 is an enlarged view of a periphery of a wedge in a circumferential cross section of a stator slot and a rotor slot according to a second embodiment.
[FIG. 7] FIG. 7 is an enlarged view of a periphery of a wedge in a circumferential cross section of a stator slot and a rotor slot according to a third embodiment.
[FIG. 8] FIG. 8 is an enlarged view of a periphery of a wedge in a circumferential cross section of a stator slot and a rotor slot according to a fourth embodiment.
[FIG. 9] FIG. 9 is an enlarged view of a periphery of a wedge in a circumferential cross section of a stator slot and a rotor slot according to a fifth embodiment.
[FIG. 10] FIG. 10 is an enlarged view of a periphery of a wedge in a circumferential cross section of a stator slot and a rotor slot according to a sixth embodiment.
[FIG. 11] FIG. 11 is an enlarged view of a periphery of a wedge in a circumferential cross section of a stator slot and a rotor slot according to a seventh embodiment.
[FIG. 12] FIG. 12 is an enlarged view of a periphery of a wedge in a circumferential cross section of a stator slot and a rotor slot according to an eighth embodiment.
[FIG. 13] FIG. 13 is a configuration view of an AC motor drive system used in an electric railway vehicle according to a ninth embodiment.

Description of Embodiments

Hereinafter, an embodiment of the present invention will be described in detail with reference to the drawings.

(1) First Embodiment

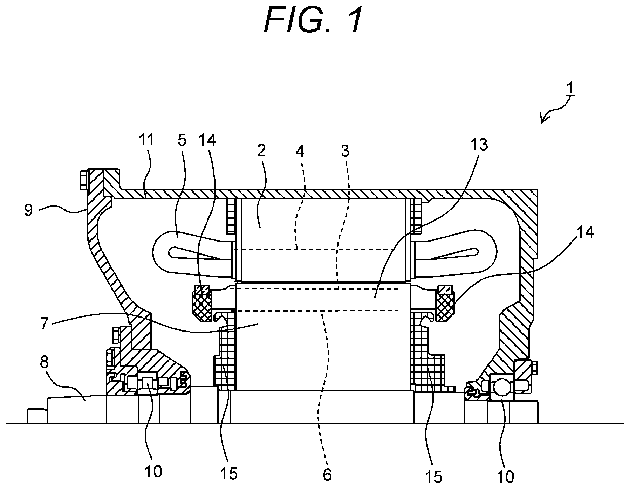

FIG. 1 is an axial cross-sectional view of a rotating electric machine 1 according to the first embodiment. Here, the rotating electric machine 1 is illustrated as an induction motor, and will be described as the induction motor in the following embodiments.
In the rotating electric machine 1, a stator 2 includes a stator core 4, a multi-phase stator winding 5 wound around the stator core 4, and a housing 11 that holds the stator core 4 on its inner peripheral surface or inside.
On the other hand, a rotor 3 includes a rotor core 7, a pressing plate 15, a shaft 8, and a bearing 10. The bearing 10 is rotatably held. The bearing 10 is supported by an end bracket 9, and the end bracket 9 is fixed to the housing 11. The rotor core 7 is axially suppressed at both ends in an axial direction by the pressing plates 15.
The rotor core 7 of the rotor 3 is provided with a plurality of rotor slots 6 configured to receive therein rotor conductor rods 13 each of which is made of a conductor. The rotor conductor rod 13 is connected to end rings 14 at both axial ends of the rotor 3.

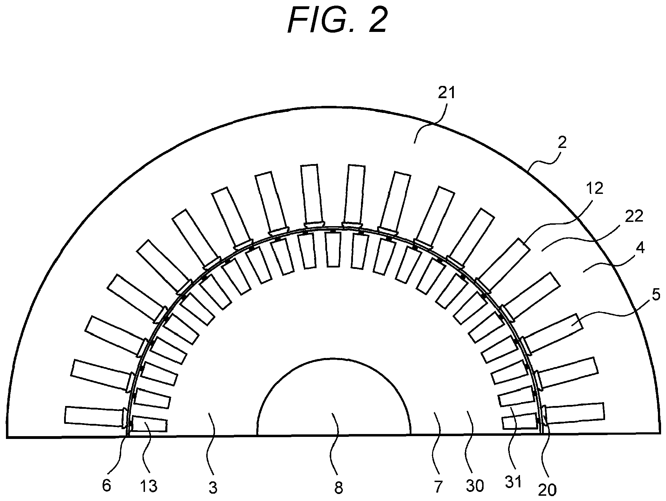

FIG. 2 illustrates an earth spirit of a cross-sectional configuration of the rotating electric machine 1 illustrated in FIG. 1. Incidentally, the housing is not illustrated. In the illustrated example, the rotating electric machine 1 mainly includes the stator 2 and the rotor 3. The stator 2 includes the stator core 4 and the stator winding 5. The stator winding 5 is wound around the stator core 4.
The stator core 4 includes a cylindrical stator yoke 21 and a plurality of stator teeth 22. The plurality of stator teeth 22 protrude radially inward from a surface of an inner periphery of the stator yoke 21, and is configured to extend in the axial direction along an inner peripheral surface of the stator yoke 21.
The stator teeth 22 are arranged at equal intervals in a circumferential direction along the inner peripheral surface of the stator yoke 21. A stator slot 12 in which the stator winding 5 is housed is formed between the stator teeth 22. The stator winding 5 is housed in the stator slot 12, and the stator winding 5 is fixed by a wedge 20 such that the stator winding 5 does not drop off into a gap between the stator 2 and the rotor 3. The wedge 20 is made of a material having magnetism.

The rotor core 7 in which a plurality of electromagnetic steel sheets are stacked is inserted in the rotor 3, and the rotor conductor rods 13 are inserted in the plurality of rotor slots 6 provided in the rotor core 7.

The rotor core 7 includes: a cylindrical rotor yoke 30; and a plurality of rotor teeth 31 that protrude radially outward from a surface of an outer periphery of the rotor yoke 30 and extend in the axial direction along an outer peripheral surface of the rotor yoke 30.

The rotor teeth 31 are arranged at equal intervals in the circumferential direction along the outer peripheral surface of the rotor yoke 30. Further, the plurality of the rotor slots 6 configured to accommodate the rotor conductor rods 13 are arranged at equal intervals in the circumferential direction between the rotor teeth 31.

The rotor core 7 employs a structure in which a hole that allows the shaft 8 penetrating in the axial direction to pass therethrough is bored in an inner peripheral portion of the rotor core 7.

The rotor 3 is configured by stacking electromagnetic steel sheets in which holes for passage of the shaft 8 have been bored and inserting the shaft 8 into the holes for passage of the shaft 8. The rotor 3 rotates clockwise and counterclockwise, and is operated as an electric motor or a generator.

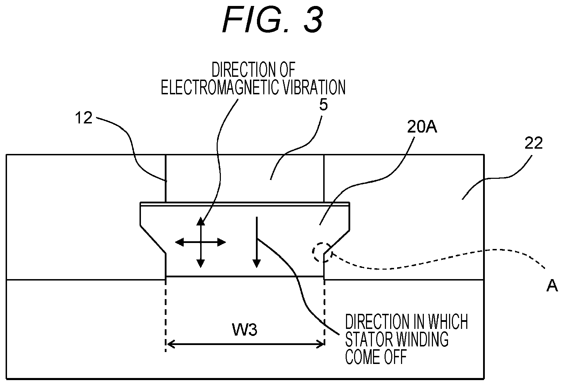

FIG. 3 illustrates a configuration example of a general wedge 20A and the like as a comparative example for the present embodiment. The illustrated example illustrates a configuration example in a case where a fixed slot 12 and the wedge 20A are enlarged. The wedge 20A is fitted to the stator teeth 22.

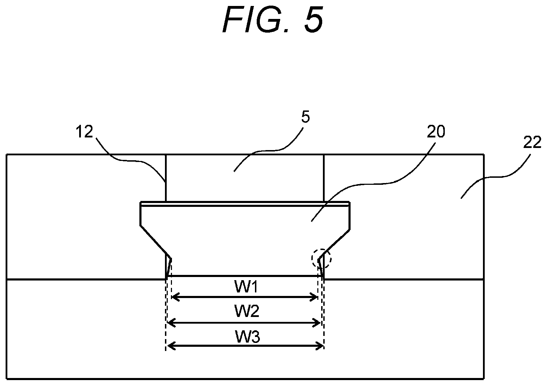

The gravity (in the illustrated down direction) of the stator winding 5 is applied to the wedge 20A, and further, the wedge 20A has magnetism. Thus, the wedge 20A vibrates as a result of receiving an electromagnetic force in an up-down method, a left-right direction, or a combination of these directions (in the illustrated direction of electromagnetic vibration). There is a possibility that the wedge 20A may receive these forces at a contact portion with the stator teeth 22, and be damaged as stress is concentrated at a point A of the wedge 20A. In the present embodiment, in order to mitigate such stress concentration, a width W1 (see FIG. 5 to be described later) at a fitting portion of the wedge 20 with the stator teeth 22 is configured to be smaller than a rotor-side opening width W3 of the stator slot 12.

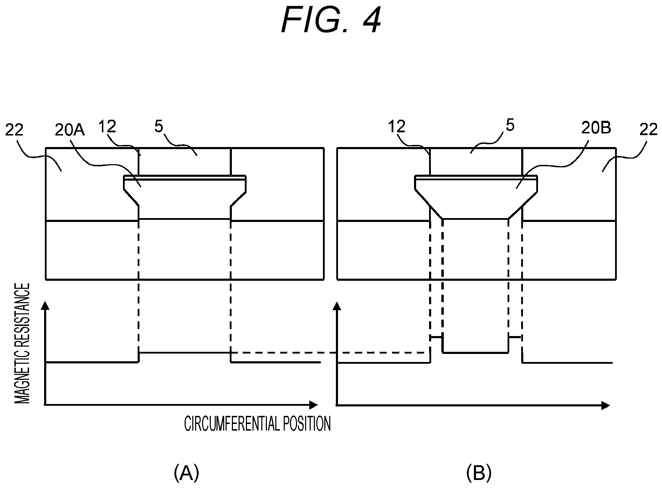

FIGS. 4(A) and 4(B) respectively illustrate verification examples of a magnetic resistance of a gap portion as viewed from the rotor when dimensions on a rotor gap surface side of the above-described general wedge 20A are changed. Incidentally, a structure on the rotor side is not considered herein. A magnetic resistance R_g is expressed by a following formula.

$$R\_g = L/(\mu \cdot S)$$

Here, $\mu$ is a permeability, L is a magnetic path length, and S is a cross-sectional area.

As a result, in the case of air in which a relative permeability is 1, the magnetic resistance R_g increases. On the other hand, in the case of a material in which a relative permeability is higher than 1 such as a wedge having magnetism (hereinafter, also referred to as a "magnetic wedge"), there is a small variation of the magnetic resistance, that is, there is a small radio frequency loss if occupying the stator slot more. Therefore, it is possible to say that the effect of the loss reduction is greater if the wedge 20 occupies openings of the stator slots 12 more as illustrated in FIG. 4(A) in order to reduce the radio frequency loss generated in the rotating electric machine 1 according to the present embodiment.

FIG. 5 illustrates a configuration example in which a periphery of the wedge 20 is enlarged with respect to a circumferential cross section of the rotating electric machine 1 according to the first embodiment.

In the present embodiment, the fitting portion of the wedge 20 has a tapered shape such that a circumferential width of the wedge 20 reduces toward the inner peripheral side, the wedge 20 is configured so as to have a convex shape from a terminal end on the inner peripheral side of this taper toward the more inner peripheral side, and the circumferential width W1 of the wedge 20 at the terminal end on the inner peripheral side of the taper is smaller than the opening of the stator slot 12, thereby mitigating the stress concentration. Further, the present embodiment is characterized in that the radio frequency loss is reduced by making a circumferential width W2 of a surface of the wedge 20 opposing the rotor larger than the circumferential width W1 of the wedge 20, and the rotating electric machine is provided with the wedge 20 having a relationship of W1 ≤ W2 < W3 when the width of the opening of the slot 12 is defined as W3.

According to the above configuration, it is possible to mitigate the stress concentration on the portion in which the wedge 20 is fitted to the stator teeth 22 (the point indicated by the broken line in the drawing, which corresponds to the point A illustrated in FIG. 3 described above) due to reduction of the radio frequency loss and an electromagnetic excitation force applied to the magnetic wedge, and further, it is possible to reduce the radio frequency loss, so that it is possible to improve the reliability of the rotating electric machine 1 and efficiency.

(2) Second Embodiment

A rotating electric machine according to a second embodiment has substantially similar configurations and operations as the rotating electric machine according to the first embodiments. Thus, the similar configurations and operations will not be described, and differences therebetween are mainly described hereinafter.

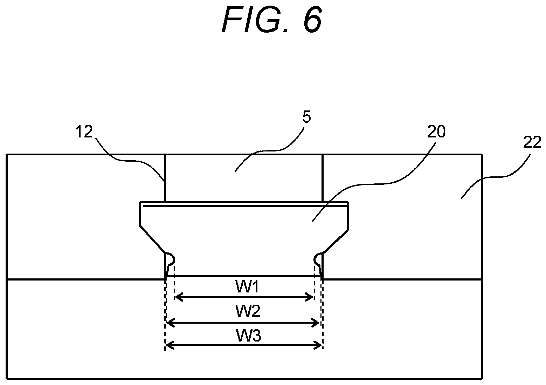

FIG. 6 illustrates a cross-sectional configuration example of the rotating electric machine according to the second embodiment, and is an enlarged view of a periphery of the wedge 20 similarly to FIG. 5. In the illustrated example, a substantially similar configuration is provided regarding the relationship between the width of the wedge 20 and the opening of the stator slot 12 illustrated in FIG. 5 in the first embodiment. A characteristic configuration in the second embodiment is that the wedge 20 is provided with a curved surface having a curvature R in a portion having a width W1 at a terminal end of a taper inner peripheral side of a fitting portion of the wedge 20 with the stator teeth 22.

Since such a curved surface having the curvature R is provided in the present embodiment, it is possible to mitigate stress concentration when a force is applied to the wedge 20 in a direction in which the stator winding 5 drops off (jumps out of) the wedge 20 or even if an electromagnetic force is applied.

According to the embodiment described above, the stress concentration is mitigated by providing the curved surface having the curvature R at the above-described point A of the wedge 20 where the stress is concentrated, so that a radial height of the wedge 20 can be reduced. Thus, it is possible to reduce a conduction loss generated in the rotating electric machine 1 by expanding a cross-sectional area of the stator winding 5 and to make the rotating electric machine 1 highly efficient.

(3) Third Embodiment

A rotating electric machine according to a third embodiment has substantially similar configurations and operations as the rotating electric machine according to the respective embodiments described above. Thus, the similar configurations and operations will not be described, and differences therebetween are mainly described hereinafter.

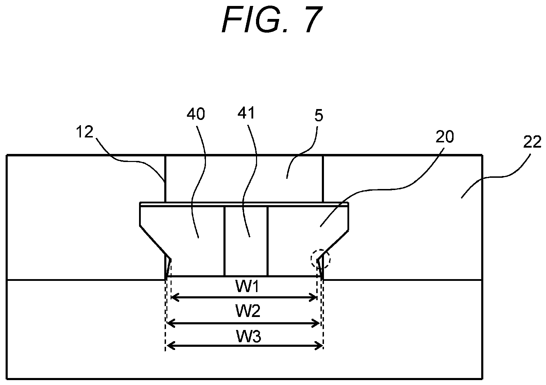

FIG. 7 illustrates a cross-sectional configuration example of the rotating electric machine according to the third embodiment, and is an enlarged view of a periphery of the wedge 20 similarly to FIG. 5. In the illustrated example, a substantially similar configuration is provided regarding the relationship between the width of the wedge 20 and the opening of the stator slot 12 illustrated in FIG. 5 in the first embodiment. A characteristic configuration in the third embodiment is that a material 41 having a low relative permeability is used in a central portion of the wedge 20 and a material 40 having a high relative permeability is used on both sides of the central portion.

In the present embodiment, the material 41 having the low relative permeability is used in the central portion side of the wedge 20 and the material 40 having the high relative permeability is used on both the sides thereof to be fitted to the stator teeth 22, and the material 41 having the low relative permeability and the material 40 having the high relative permeability are bonded by heat melting, so that it is possible to reduce a radio frequency component of a magnetic flux density in a gap while suppressing a leakage magnetic flux in the wedge 20. Moreover, these material 40 having the high relative permeability and material 41 having the low relative permeability are bonded by heat melting, whereby the strength can be enhanced.

According to the embodiment described above, a portion in contact with the stator teeth 22 is the material having a high relative permeability. Thus, it is possible to reduce both a conduction loss and a radio frequency loss generated in the rotating electric machine 1 by reducing the leakage magnetic flux of the stator slot 12 in the wedge 20, and the rotating electric machine 1 can be made highly efficient.

(4) Fourth Embodiment

A rotating electric machine according to a fourth embodiment has substantially similar configurations and operations as the rotating electric machine according to the respective embodiments described above. Thus, the similar configurations and operations will not be described, and differences therebetween are mainly described hereinafter.

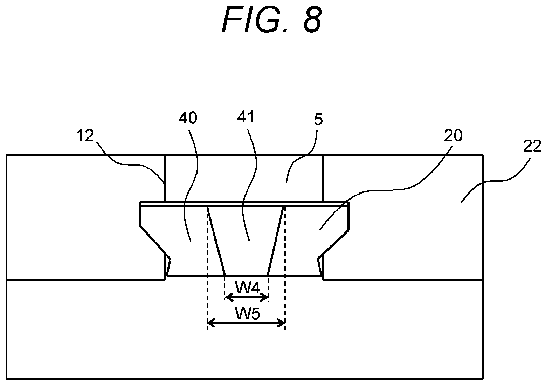

FIG. 8 illustrates a cross-sectional configuration of the rotating electric machine 1 according to the fourth embodiment, and is an enlarged view of a periphery of the wedge 20 similarly to FIG. 7. In the illustrated example, the relationship between the width of the wedge 20 and the opening of the stator slot 12 illustrated in FIG. 7 in the third embodiment, and the configuration in which the material having the high relative permeability and the material having the low relative permeability are similar.

A characteristic configuration in the present embodiment is that a circumferential width W4, which is on a rotor side of a portion of the wedge 20 made of the material 41 having the low relative permeability, and a circumferential width W5, which is on an outer diameter side of a stator, have a relationship of $W4 \leq W5$.

In the present embodiment, the circumferential width W4, which is on the rotor side of the portion of the wedge 20 made of the material 41 having the low relative permeability, is set to be smaller than the circumferential width W5 on the outer diameter side of the stator. Thus, a proportion of the material having the high relative permeability on the rotor side of the wedge 20 increases, so that it is possible to suppress a radio frequency component of a magnetic flux density in a gap and reduce a radio frequency loss.

According to the embodiment described above, it is possible to reduce the radio frequency loss by setting the circumferential width W4, which is on the rotor side of the portion of the wedge 20 made of the material 41 having the low relative permeability, to be smaller than the circumferential width W5 on the outer diameter side of the stator, and the rotating electric machine 1 can be made highly efficient.

(5) Fifth Embodiment

A rotating electric machine according to a fifth embodiment has substantially similar configurations and operations as the rotating electric machine according to the respective embodiments described above. Thus, the similar configurations and operations will not be described, and differences therebetween are mainly described hereinafter.

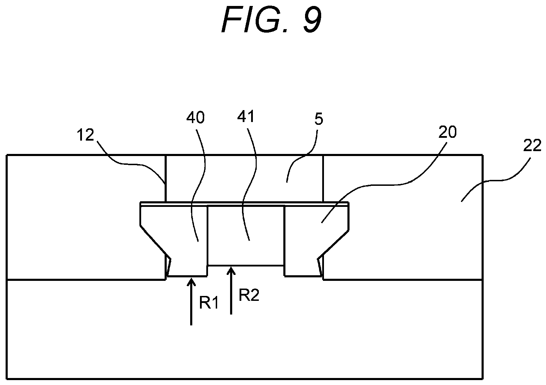

FIG. 9 illustrates a cross-sectional configuration of the rotating electric machine according to the fifth embodiment, and is an enlarged view of a periphery of the wedge 20 similarly to FIG. 7. In the illustrated example, the relationship between the width of the wedge 20 and the opening of the stator slot 12 illustrated in FIG. 7, and the configuration in which the material having the high relative permeability and the material having the low relative permeability are similar.

A characteristic configuration in the present embodiment is that a distance R1 from a shaft center of a motor (not illustrated) to a rotor side of the material 40 with the high relative permeability in the wedge 20 and a distance R2 from the shaft center to the rotor side of the material 41 with the low relative permeability have a relationship of R1 ≤ R2.

In the present embodiment, the rotor side of the material 41 having the low relative permeability is made of air having a relative permeability of 1. Thus, a leakage magnetic flux in the wedge 20 can be reduced, and a current conducted to a stator winding 5 can be reduced.

According to the embodiment described above, the rotor side of the material 41 having the low relative permeability of the wedge 20 is made of air having the relative permeability of 1, so that the current can be reduced with the reduction in the leakage magnetic flux, and a conduction loss generated in the rotating electric machine 1 can be reduced. Thus, the rotating electric machine 1 can be made highly efficient.

(6) Sixth Embodiment

A rotating electric machine according to a sixth embodiment has substantially similar configurations and operations as the rotating electric machine according to the respective embodiments described above. Thus, the similar configurations and operations will not be described, and differences therebetween are mainly described hereinafter.

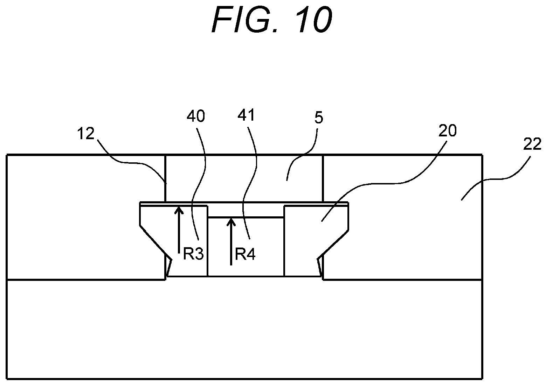

FIG. 10 illustrates a cross-sectional configuration of the rotating electric machine according to the sixth embodiment, and is an enlarged view of a periphery of the wedge 20 similarly to FIG. 7. In the illustrated example, the relationship between the width of the wedge 20 and the opening of the stator slot 12 illustrated in FIG. 7, and the configuration in which the material having the high relative permeability and the material having the low relative permeability are similar.

A characteristic configuration in the present embodiment is that a distance R3 from a shaft center of a motor to an outer diameter side of the material 40 with the high relative permeability of the wedge 20 and a distance R4 from the shaft center to the rotor side of the material 41 with the low relative permeability of the wedge 20 has a relationship of R4 ≤ R3.

According to the embodiment described above, an effect that is substantially similar to the effect of the fifth embodiment can be obtained, and it is possible to reduce a conduction loss generated in the rotating electric machine 1 and make the rotating electric machine 1 highly efficient.

(7) Seventh Embodiment

A rotating electric machine according to a seventh embodiment has substantially similar configurations and operations as the rotating electric machine according to the respective embodiments described above. Thus, the similar configurations and operations will not be described, and differences therebetween are mainly described hereinafter.

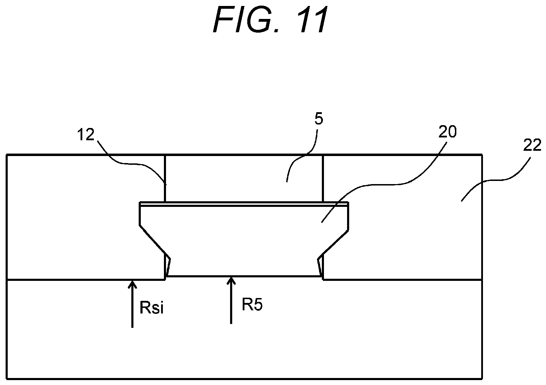

FIG. 11 illustrates a cross-sectional configuration of the rotating electric machine according to the seventh embodiment, and is an enlarged view of a periphery of the wedge 20 similarly to FIG. 5 in the first embodiment. In the illustrated example, the relationship between the width of the wedge 20 and the opening of the stator slot 12 illustrated in FIG. 5 in the third embodiment is substantially similar.

A characteristic configuration in the present embodiment is that a distance R5 from a shaft center of a motor to a rotor side of the wedge 20 and a radius Rsi on an inner diameter side of a stator have a relationship of Rsi ≤ R5.

In the present embodiment, the distance R5 between the rotor side of the wedge 20 and the shaft center of the motor is set to be larger than an inner diameter Rsi of a stator teeth, and thus, a distance between the stator 2 and the rotor 3 can be made short by shortening the inner diameter Rsi of the stator teeth, so that it is possible to reduce a current flowing through a stator winding 5.

According to such a configuration, it is possible to reduce a conduction loss generated in the rotating electric machine 1 by shortening the distance between the stator 2 and the rotor 3 and reducing the current, and the rotating electric machine 1 can be made highly efficient.

(8) Eighth Embodiment

A rotating electric machine according to an eighth embodiment has substantially similar configurations and operations as the rotating electric machine according to the respective embodiments described above. Thus, the similar configurations and operations will not be described, and differences therebetween are mainly described hereinafter.

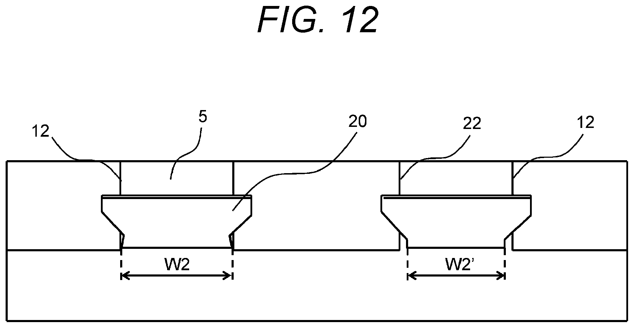

FIG. 12 illustrates a cross-sectional configuration of the rotating electric machine according to the eighth embodiment, and is an enlarged view of a periphery of the wedge 20 similarly to FIG. 4. In the illustrated example, the relationship between the width of the wedge 20 and the opening of the stator slot 12 illustrated in FIG. 5 in the first embodiment is similar.

A characteristic configuration in the present embodiment is that the circumferential dimension W2 on the rotor side of the wedge 20 is different in at least one slot among the plurality of stator slots 12.

In the present embodiment, the width W2 on the rotor side of the wedge 20 is different in at least one slot among the plurality of the stator slots 12, and thus, a phase of a radio frequency component of a magnetic flux density of a gap changes between a case where the width of the wedge 20 is W2 and a case where the width of the wedge 20 is W2', and it is possible to cancel the radio frequency components of the gap magnetic flux densities obtained by adding these.

According to the embodiment described above, the radio frequency component of the gap magnetic flux density can be reduced, and thus, a radio frequency loss generated in the rotating electric machine according to the present embodiment can be reduced, and the rotating electric machine 1 can be made highly efficient.

Although the shape of the wedge 20 has been described so far as above, there is a manufacturing method using a three-dimensional printer as a method of manufacturing, at low cost, a complicated shape or a configuration using different metals. If the three-dimensional printer is used for mass production without any restriction on the shape, the magnetic wedge according to the present embodiment can be manufactured at low cost. As a result, it is possible to provide the rotating electric machine 1 with improved reliability and improved efficiency as described above.

Incidentally, although the rotating electric machine according to the present embodiment has been described by taking the induction motor as an example, the similar effect can be exhibited in any AC motor between a permanent magnet synchronous motor and a switched reluctance motor.

(9) Ninth Embodiment

In a ninth embodiment, a description will be given regarding a vehicle using an AC motor drive system equipped with a rotating electric machine having substantially similar configurations and operations as the rotating electric machine according to each of the above-described embodiments.

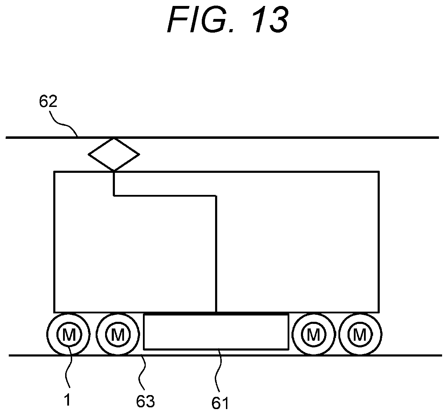

FIG. 13 illustrates a configuration example of the vehicle according to the ninth embodiment. In the illustrated example, a railway vehicle is given as an example of the vehicle using the AC motor drive system equipped with the rotating electric machine according to each of the embodiments described above.

In the railway vehicle, electric power is supplied to a drive device, equipped therein, from an overhead wire 62 via a current collector, and AC power is supplied to the rotating electric machine 1 via a power conversion device 61 to drive the rotating electric machine 1. The rotating electric machine 1 is connected to an axle of the railway vehicle, and traveling of the railway vehicle is controlled by the rotating electric machine 1. An electrical ground is connected via a rail 63. Here, a voltage of the overhead wire 62 may be either DC or AC.

According to the embodiment described above, the railway vehicle system is equipped with the rotating electric machine according to each of the embodiments described above, so that it is possible to operate the drive system of the railway vehicle with high efficiency similarly to each of the above-described embodiments.

(10) Other Embodiments

The above embodiments are examples given to describe the present invention, and are not intended to limit the present invention only to these embodiments. The present invention can be implemented in various modes without departing from a gist thereof.

In addition, although the example in which the rotating electric machine according to the present embodiment is applied to the railway vehicle has been described as above, the similar effect can be exhibited even if the rotating electric machine is applied to a vehicle that is operated at variable speeds with the AC motor drive system, such as a dump truck for construction machinery, an excavator, a wheel loader, a hybrid vehicle, or an electric vehicle.

Industrial Applicability

The present invention can be widely applied to rotating electric machines provided with magnetic wedges. Reference Signs List

| | |
|---|---|
| 2 | stator |
| 3 | rotor |
| 4 | stator core |
| 5 | stator winding |
| 6 | rotor slot |
| 7 | rotor core |
| 8 | shaft |
| 9 | end bracket |
| 10 | bearing |
| 11 | housing |
| 12 | stator slot |
| 13 | rotor conductor rod |
| 14 | end ring |
| 15 | pressing plate |
| 20 | wedge |
| 20A | wedge (comparative example) |
| 21 | stator yoke |
| 22 | stator teeth |
| 30 | rotor yoke |
| 31 | rotor teeth |

40    portion of wedge having high relative permeability
41    portion of wedge having low relative permeability
31    rotor teeth
61    power conversion device
62    overhead wire
63    rail

**Claims**

1.  A rotating electric machine comprising:

    a stator;
    a rotor arranged with a gap so as to oppose the stator;
    a stator core having a plurality of teeth formed therein; and
    a stator slot that houses a stator winding between adjacent teeth among the plurality of teeth, the stator slot having a slot opening larger than a width of the stator winding and a magnetic wedge being fitted in the slot opening,
    wherein the magnetic wedge has a fitting portion formed with a taper in which a circumferential width of the magnetic wedge reduces toward an inner peripheral side, and is configured to form a convex shape from a terminal end on the inner peripheral side of the taper toward the more inner peripheral side, and
    a circumferential width W1 of the magnetic wedge at the terminal end on the inner peripheral side of the taper, a circumferential width W2 of a surface of the magnetic wedge that opposes the rotor, and a width W3 of the slot opening have a relationship of $W1 \leq W2 < W3$.

2.  The rotating electric machine according to claim 1, wherein
    the terminal end on the inner peripheral side of the taper of the magnetic wedge has a curved surface with a curvature R.

3.  The rotating electric machine according to claim 1 or 2, wherein
    the magnetic wedge is configured using a plurality of materials with different relative permeabilities, a portion including a material having a high relative permeability is fitted to a stator teeth, and a portion including a material having a low relative permeability is arranged on a central portion side of a slot, and the material having the low relative permeability and the material having the high relative permeability are bonded by heat melting.

4.  The rotating electric machine according to claim 3, wherein
    a circumferential width W4 on a side of the rotor in the portion including the material having the low relative permeability and a circumferential width W5 on an outer diameter side of the stator have a relationship of $W4 \leq W5$.

5.  A rotating electric machine comprising:

    the magnetic wedge according to claim 3, wherein a distance R1 from a shaft center of a motor to a side of the rotor in the portion including the material having the high relative permeability and a distance R2 from the shaft center to the side of the rotor in the portion including the material having with the low relative permeability have a relationship of $R1 \leq R2$.

6.  The rotating electric machine according to claim 3, wherein
    a distance R3 from a shaft center of a motor to an outer diameter side of the portion including the material having the high relative permeability and a distance R4 from the shaft center to a side of the rotor in the portion including the material having the low relative permeability have a relationship of $R4 \leq R3$.

7.  The rotating electric machine according to any one of claims 1 to 6, wherein
    a distance R5 from a shaft center of a motor to a side of the rotor of the magnetic wedge and a radius RSi on an inner diameter side of the stator have a relationship of $RSi \leq R5$.

8.  The rotating electric machine according to any one of claims 1 to 7, wherein
    a circumferential dimension on the side of the rotor of the magnetic wedge is different in at least one or more stator slots among a plurality of the stator slots.

9.  The rotating electric machine according to claim 1, being any AC motor among an induction motor, a permanent magnet synchronous motor, and a switched reluctance motor.

10. A vehicle comprising a drive system equipped with a rotating electric machine, the rotating electric machine including: a stator; a rotor arranged with a gap so as to oppose the stator; a stator core having a plurality of teeth formed therein; and a stator slot that houses a stator winding between adjacent teeth among the plurality of teeth, the stator slot having a slot opening larger than a width of the stator winding and a magnetic wedge being fitted in the slot opening, wherein the magnetic wedge has a fitting portion formed with a taper in which a circumferential width of the magnetic wedge reduces toward an inner peripheral side, and is configured to form a convex shape from a terminal end on the inner peripheral side of the taper toward the more inner peripheral side, and a circumferential width W1 of the magnetic wedge at the terminal end on the inner peripheral side of the taper, a circumferential width W2 of a surface of the magnetic wedge that opposes the rotor, and a width W3 of the slot opening have a relationship of W1 $\leq$ W2 < W3.

# FIG. 1

# FIG. 2

# FIG. 3

DIRECTION OF
ELECTROMAGNETIC VIBRATION

12    5    20A    22

W3

DIRECTION IN WHICH
STATOR WINDING
COME OFF

A

# FIG. 4

(A)                                   (B)

# FIG. 5

# FIG. 6

# FIG. 7

# FIG. 8

FIG. 9

# FIG. 10

FIG. 11

# FIG. 12

# FIG. 13

| | INTERNATIONAL SEARCH REPORT | International application No. |
|---|---|---|
| | | PCT/JP2018/047980 |

**A. CLASSIFICATION OF SUBJECT MATTER**
Int.Cl. H02K3/493(2006.01)i

According to International Patent Classification (IPC) or to both national classification and IPC

**B. FIELDS SEARCHED**

Minimum documentation searched (classification system followed by classification symbols)
Int.Cl. H02K3/493

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | CD-ROM of the specification and drawings annexed to the request of Japanese Utility Model Application No. 60708/1991 (Laid-open No. 9154/1993) (MITSUBISHI ELECTRIC CORPORATION) 05 February 1993, paragraphs [0003]-[0011], all drawings<br>(Family: none) | 1-4, 7, 9-10<br>5-6, 8 |
| Y<br>A | WO 2000/16466 A1 (HITACHI, LTD.) 23 March 2000, specification, page 5, line 26 to page 7, line 12, fig. 4-6<br>& AU 9094398 A | 1-4, 7, 9-10<br>5-6, 8 |
| Y | JP 8-172742 A (TOSHIBA CORPORATION) 02 July 1996, paragraphs [0073]-[0075], fig. 6<br>(Family: none) | 7 |

☒ Further documents are listed in the continuation of Box C.　　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28.02.2019 | 12.03.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | <br><br>Telephone No. |

Form PCT/ISA/210 (second sheet) (January 2015)

**INTERNATIONAL SEARCH REPORT**

International application No.

PCT/JP2018/047980

C (Continuation).  DOCUMENTS CONSIDERED TO BE RELEVANT

| Category* | Citation of document, with indication, where appropriate, of the relevant passages | Relevant to claim No. |
|---|---|---|
| A | JP 57-49339 A (TOKYO SHIBAURA ELECTRIC CO., LTD.) 23 March 1982, page 2, upper right column, line 18 to lower left column, line 10, fig. 5 (Family: none) | 1-10 |
| A | JP 2003-79087 A (TMA ELECTRIC CORP.) 14 March 2003, paragraphs [0012]-[0022], fig. 5 (Family: none) | 1-10 |
| A | JP 61-210855 A (TOSHIBA CORPORATION) 19 September 1986, entire text, all drawings (Family: none) | 1-10 |
| A | JP 4-75441 A (TOSHIBA CORPORATION) 10 March 1992, entire text, all drawings (Family: none) | 1-10 |
| A | JP 8-33251 A (HITACHI, LTD.) 02 February 1996, paragraphs [0045]-[0048], fig. 7 (Family: none) | 8 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010136460 A
- JP H59154 A
- JP H6311683 A
- JP 2009219277 A